# EUROPEAN PATENT SPECIFICATION

(11) **EP 1 744 624 B1**
(45) Date of publication and mention of the grant of the patent: **14.11.2012**
(21) Application number: 05733708.1
(22) Date of filing: 20.04.2005
(51) Int. Cl.: A01N 25/00, A01N 35/00, A01N 37/36, A01N 65/00

(54) **Pesticides containing salicylaldehyde and garlic extract**
Salicylaldehyd und Knoblauchextrakt enthaltende Pestizide
Pesticides contenant du salicylaldehyde et de l'extrait d'ail

(30) Priority: 26.04.2004 GB 0409205; 24.06.2004 GB 0414153
(43) Date of publication of application: 24.01.2007
(73) Proprietor: Future Tense Technological Development & Entrepreneurship Ltd., 37111 Pardes Hanna (IL)
(72) Inventor: TSIVION, Yoram, 37111 Pardes Hanna (IL)
(74) Representative: Messulam, Alec Moses
(86) International application number: PCT/IL2005/000415
(87) International publication number: WO 2005/102024

(56) References cited:
- EP-A1- 0 945 066
- EP-A2- 1 216 617
- WO-A1-02/076217
- WO-A2-98/53678
- US-A1- 2002 028 256
- US-B1- 6 231 865
- ROY HARTENSTEIN: "Effect of aromatic compounds, humic acids and lignins on growth of the earthworm" SOIL BIOL. BIOCHEM,, vol. 14, 1982, pages 595-599, XP002606277
- CINTA CALVET ET AL.: "Evaluation of natural chemical compounds against root-lesion and root-knot nematodes and side-effects on the infectivity of arbuscular mycorrhizal fungi" EUROPEAN JOURNAL OF PLANT PATHOLOGY, vol. 107, 2001, pages 601-605, XP002606278
- DEB-KIRTANIYA S ET AL: "EXTRACTS OF GARLIC ALLIUM-SATIVUM AS POSSIBLE SOURCE OF INSECTICIDES" INDIAN JOURNAL OF AGRICULTURAL SCIENCES, INDIAN COUNCIL OF AGRICULTURAL RESEARCH, NEW DELHI, IN, vol. 50, no. 6, 1 January 1980 (1980-01-01), pages 507-510, XP009055038 ISSN: 0019-5022
- BUDAVARI ET AL: 'Vanillin.' THE MERK INDEX. 1989, page 1561, XP008137897

## Description

### TECHNICAL FIELD OF THE INVENTION

The present invention relates to means for controlling invertebrate pests such as insects, slugs, caterpillars and worms. More specifically the invention deals with naturally occurring chemical compositions for controlling such pests in the agricultural fields.

### BACKGROUND OF THE INVENTION

In the agricultural practice synthetic toxic agents are used to reduce the population of harmful insects in the crops. Typical chemical agents employed in the composition of such agents are organophosphorus and carbamate compounds. The toxicity associated with such substances is often harmful to the environment and to the consumers of food products produced from the crops. To facilitate cultivation of crops and yet keep the harmful effect low, chemical agents having reduced toxicity have been introduced to control pests. For example, the application of plant essential oils to combat beetles in packages of food products disclosed in US patent application publication US 2003/0091661 A1.

Slugs and snails cause damages to agricultural set ups and gardens by consuming vegetative material. To combat molluscs, more or less specific poisons are distributed in localities in which the pests thrive. Metaldehyde which is tetramer of acetaldehyde is an effective mollusc poison but is also quite toxic to mammals and birds. Metiocarb is a carbamate also widely used and is also toxic at least to mammals. Salts of metals and chelates of metals, such as aluminium or heavy metals are also effective as mollusc poison, for example as disclosed in WO 9605728A1.

Earthworms are usually not classified as pests, but for the maintenance and use of turf grass fields and especially golf courses their effect may be disadvantageous. They create small mounds of ingested soil called castings, which interferes with the workability and playability of the turf grass field. As of today, there does not seem to be a well established chemical control agent for earthworms, may be partially because in the registration process the damaged caused by candidate pesticides to earthworms is considered a drawback (Donald Lewis, Department of Entomology, Iowa State University, Ames, Iowa, in "Horticulture and Home Pest News" April 14. 1995, p. 47)

Butterfly and moth larva (caterpillars) are oftentimes considered as pests notably by the sheer consummation of a large amount of plant material. Other than synthetic poisons for controlling such pests, there are several natural chemical agents used. Some are biological origin such as BT (Bacillus thuringinensis) or spinosad. Soaps can also be used for the control of caterpillars.

Salicylaldehyde is a naturally occurring substance. In some plants and plant parts its concentration is considerable. It has been shown by Pasteels JM and JC Gregoire, 1983 (The chemical ecology of defense in Arthropods, Ann Rev Entomol 28:263-289) that larvae of the chrysomelid tribe Phaedomini secret salicylaldehyde. The salicylaldehyde is used as a natural repellent by the feeding beetle against small predators such as ants. The salicylaldehyde is produced by the larvae from salicin, a glucoside, which is extracted by the larvae from the host plant, and further used to produce salicylaldehyde by the feeding beetle.

### SUMMARY OF THE INVENTION

According to a first aspect of the invention, there is provided a use for a composition comprising a mixture of salicylaldehyde, a suitable surfactant and garlic extract, said use for controlling slugs, larvae of butterflies and moth larvae, and earthworms wherein said composition is applied mixed in water.

According to a second aspect of the invention, there is provided a method of controlling slugs, larvae of butterflies and moth larvae, and earthworms comprising:
preparing a composition comprising salicylaldehyde, garlic extract and a suitable carrier, and
applying said composition to said slugs, larvae of butterfly and moth larvae, and earthworms.

### DETAILED DESCRIPTION OF THE PRESENT INVENTION

Salicylaldehyde was used as described below to control several types of pests.

### Preparation of materials for experiments

Component A: Agral^{®} 90 (nonyl phenoxy polyethoxy ethanol) surfactant.

Component B: Garlic extract supplied by Omex Agriculture of Estuary Road, King's Lynn, Norfolk, England.

Mixture A: Twenty five (25) mls (milli - liters) of salicylaldehyde (2 - Hydroxybenzaldehyde) (Sigma -Aldrich) were mixed with 17 ml of component A. A clear stable solution forms.

Mixture B: 75 mls of component B were mixed thoroughly with 25 mls of mixture A.

### Results of October 2003 field experiments in England (comparative):

### Caterpillars:

Cabbage white fly (*Pieris rapae*) caterpillars of various sizes were collected in the field. 0.5 percent in water of mixture A were hand sprayed to full coverage on caterpillars, with constant agitation of sprayer during spraying. Seven out of seven caterpillars died within ten minutes.

Diamondback moth (*Plutella xylostella*) larvae of various sizes were collected in the field. 0.5 percent in water of mixture A were hand sprayed to full coverage on caterpillars, with constant agitation of sprayer during spraying. Eleven out of 11 died within ten minutes.

### Molluscs

A few dozens of slugs belonging to two species: grey field slug (*Deroceras reticulatum*) and black slug (*Arion ater*) were collected and placed in exposed ground site. The slugs were hand sprayed with 0.5 percent in water of mixture A to full coverage of slugs, with constant agitation of sprayer during spraying. All slugs died within about 15 to 20 minutes, and were observed after one day to ensure trueness of observation.

### Results of April 2004 laboratory experiments:

### Molluscs

Grey field slug were collected from soil and placed in perspex containers (22 cm length, 11 cm width, 8 cm deep). Three slugs were placed in each of the containers and covered in very coarse soil. There were three replicates per treatment. 50 mls of each of the following treatments was then applied as an aqueous drench: water (control), 0.5 percent in water of mixture B and 0.25 percent in water of component A. The containers were assessed twenty-four hours after treatment application. The results are shown table 1 as follows:

**Table 1.**

| Treatments | Mean % (± sd) of dead slugs 24 hours after application |
|---|---|
| Water | 0.0 (0.0) |
| Mixture B (0.5%) | 100.0 (0.0) |
| Component A (0.25%) | 11.1 (19.2) |

The effect of the surfactant (component A), though not negligible was due to one dead specimen that caused a large standard deviation in the statistical calculation. A further assessment 48 hours after treatment showed there was no change in the results.

### Earthworms

Worms (*Lumbricus terrestris*) were collected from soil and placed in large ventilated Petri dishes (15cm diameter, 4cm deep). The worms were then covered in soil (4cm, depth). Three worms were placed in each dish and there were three replicates per treatment. 25 mls of each of the following treatments was then applied as an aqueous drench: water (control), component B (3% emulsified in water), mixture B (0.5% in water) and component A (0.25%).

The Petri dishes were assessed twenty-four hours after treatment application. The results in table 2 show that the mixture B produced the highest mortality of all the treatments (88.9%). Component B produced a mortality rate in worm numbers of 55.6% although it was six times more concentrated in the drench than Mixture B. Component A did not kill any worm.

**Table 2**

| Treatments | Mean % (± sd) of dead worms 24 hours after application |
|---|---|
| Water | 0.0 (0.0) |
| Component B (3.0%) | 55.6 (38.5) |
| Mixture B (0.5%) | 88.9 (19.2) |
| Component A (0.25%) | 0.0 (0.0) |

The dishes were also assessed 48 hours after treatment but there was no further change in the results.

### Formulations:

Salicylaldehyde mixes only to a very small extent in water. To effectively enhance the mixing in water it is required to mix the agent with at least a surfactant. The Agral^{®} nonionic surfactant effectively mixes with salicylaldehyde forming a seemingly real solution, and as described above, is useful as a surfactant for the compositions of the invention. Tetra ethyl ortho - silicate mixes effectively with salicylaldehyde and can be used as a dispersant of the salicylaldehyde in water and as a filler, in addition to a surfactant. Liquid polyethylene glycol (PEG 400, Sigma Aldrich) mixes effectively with salicylaldehyde, and can also be used as a formulating agent as a filler and dispersant.

## Claims

1. A use of a composition comprising a mixture of salicylaldehyde, a suitable surfactant and garlic extract, said use for controlling slugs, larvae of butterflies and moth larvae, and earthworms.

2. The use as in claim 1, wherein the composition is dispersed in water.

3. A method of controlling slugs, larvae of butterflies and moth larvae, and earthworms comprising:
preparing a composition comprising salicylaldehyde, garlic extract and a suitable surfactant, and
applying said composition to said slugs, larvae of butterfly and moth larvae, and earthworms.

## Patentansprüche

1. Eine Verwendung einer Zusammensetzung, umfassend eine Mischung aus Salicylaldehyd, einem geeigneten Tensid und Knoblauchextrakt, wobei die Verwendung zur Bekämpfung von Nacktschnecken, Schmetterlingslarven und Mottenlarven sowie Regenwürmern ist.

2. Verwendung nach Anspruch 1, wobei die Zusammensetzung in Wasser aufgelöst wird.

3. Ein Verfahren zur Bekämpfung von Nacktschnecken, Schmetterlingslarven und Mottenlarven sowie Regenwürmern, umfassend:
Herstellen einer Zusammensetzung, umfassend Salicylaldehyd,
Knoblauchextrakt und ein geeignetes Tensid, und
Auftragen der Zusammensetzung auf die Nacktschnecken,
Schmetterlingslarven und Mottenlarven sowie Regenwürmer.

## Revendications

1. Une utilisation d'une composition comportant un mélange de salicylaldéhyde, un surfactant approprié et de l'extrait d'ail, ladite utilisation destinée à contrôler les limaces, les larves de papillons et les larves de papillons de nuit, et les vers de terre.

2. L'utilisation telle que dans la revendication 1, dans laquelle la composition est dispersée dans l'eau.

3. Un procédé pour contrôler les limaces, les larves de papillons et les larves de papillons de nuit, et les vers de terre comportant :
préparer une composition comportant du salicylaldéhyde, de l'extrait d'ail et un surfactant approprié, et
appliquer ladite composition auxdits limaces, larves de papillons et larves de papillons de nuit, et vers de terre.
